(19) Europäisches Patentamt
European Patent Office
Office européen des brevets

(11) **EP 4 622 080 A1**

(12) **EUROPEAN PATENT APPLICATION**

(43) Date of publication:
**24.09.2025 Bulletin 2025/39**

(21) Application number: **24164343.6**

(22) Date of filing: **19.03.2024**

(51) International Patent Classification (IPC):
$H02M\ 3/158^{(2006.01)}$ $H02M\ 1/00^{(2006.01)}$
$H05B\ 45/38^{(2020.01)}$

(52) Cooperative Patent Classification (CPC):
**H02M 3/158; H02M 1/0048; H05B 45/325; H05B 45/38**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Tridonic GmbH & Co. KG**
**6851 Dornbirn (AT)**

(72) Inventors:
• **STAINTHORPE, Ben**
**Newcastle upon Tyne NE1 7RU (GB)**

• **DAHIDAD, Mohamed**
**Newcastle upon Tyne NE1 7RU (GB)**
• **PICKERT, Volker**
**Newcastle upon Tyne NE1 7RU (GB)**
• **SHUKLA, Jagjitpati**
**6850 Dornbirn (AT)**
• **MAKWANA, Deepak**
**6850 Dornbirn (AT)**

(74) Representative: **Rupp, Christian**
**Mitscherlich PartmbB**
**Patent- und Rechtsanwälte**
**Karlstraße 7**
**80333 München (DE)**

(54) **POWER CONVERTER AND DRIVER FOR AT LEAST ONE LED**

(57) Disclosed is a power converter (1) for at least one LED (2). The converter (1) comprises a tapped inductance (101, $L_{mag}$, $N_1$, $N_2$) and a rectifying circuit (102), arranged in series between an input potential ($V_{in}$) and an output potential ($V_{out}$) of the converter (1). The rectifying circuit (102) comprises a rectifying switch ($S_{synch}$). The converter (1) further comprises a regulating switch (103, S), arranged between a tap of the tapped inductance (101, $L_{mag}$, $N_1$, $N_2$) and a ground potential of the converter (1). The converter (1) further comprises a first sensing circuit (104), configured to sense a voltage being indicative of a common potential ($V_{zx}$) of the tapped inductance (101, $L_{mag}$, $N_1$, $N_2$) and the rectifying circuit (102) relative to the ground potential of the converter (1). The converter (1) further comprises a second sensing circuit (106), configured to sense a voltage being indicative of a measurement value ($I_{in,meas}$) of an input current ($I_{in}$) of the converter (1). The converter (1) further comprises a control circuit (107), configured to regulate an input current of the converter (1) in accordance with a regulating duty cycle signal (D) for the regulating switch (103, S); generate the regulating duty cycle signal (D) for the regulating switch (103, S) in accordance with the common potential ($V_{zx}$) and the input current ($I_{in}$) of the converter (1); and generate a rectifying duty cycle signal ($D_R$) for the rectifying switch ($S_R$) in accordance with and being non-complementary to the regulating duty cycle signal (D). This provides an efficiency improvement especially for low output voltages.

FIG. 3

EP 4 622 080 A1

## Description

## Technical Field

The present disclosure relates generally to the field of lighting technology, and in particular to a power converter for at least one LED and to a driver comprising the same.

## Background Art

Emergency LED drivers may require a low-power and high-gain DC-DC conversion, such as from a battery voltage of 3.2V to an LED voltage of 10-54V, at high switching frequencies.

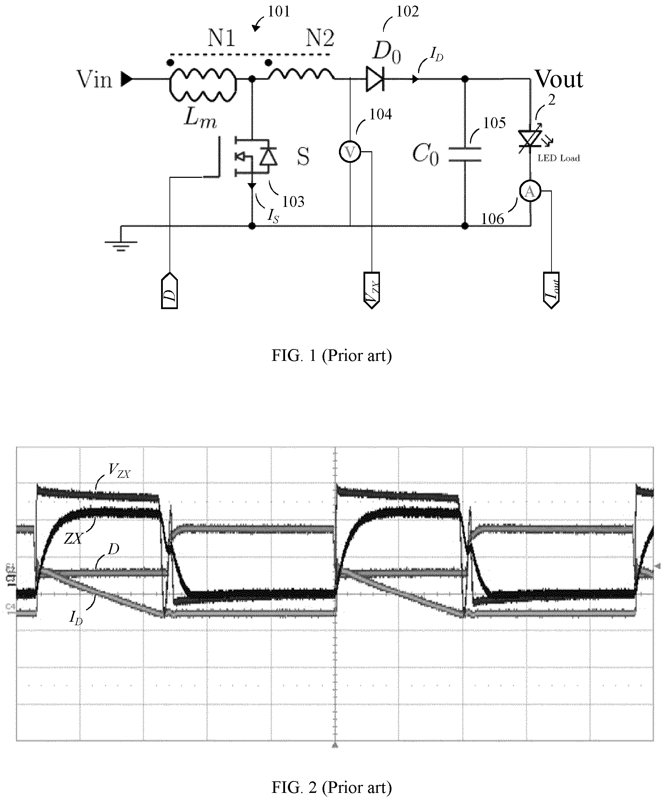

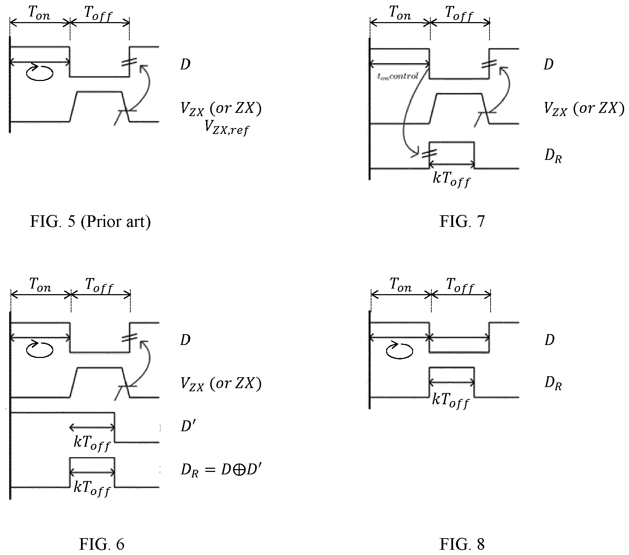

One particular example of high-gain conversion involves a tapped-inductor boost topology shown in FIG. 1. This topology requires few components and operates in a relatively simple way. For example, a straightforward implementation of a boundary conduction mode, BCM, operation may be achieved by using a turn-off of the output diode $D_0$, as indicated by a zero crossing of an anode voltage of the output diode $D_0$, to trigger a turn-on of the main/regulating switch S once the inductor current reaches zero. As shown in FIG. 2, said anode voltage $V_{ZX}$ falls from the value of the output voltage to the negative of the input voltage when the diode current reaches 0A, causing the output diode $D_0$ to turn off. As the on-time of the main/regulating switch S varies in order to maintain a constant input current and the output voltage varies according to the applied load, the zero crossing is used to self-regulate the varying off-time. This combination of control/regulation-based on-period and threshold-limited off-period is schematically indicated in FIG. 5.

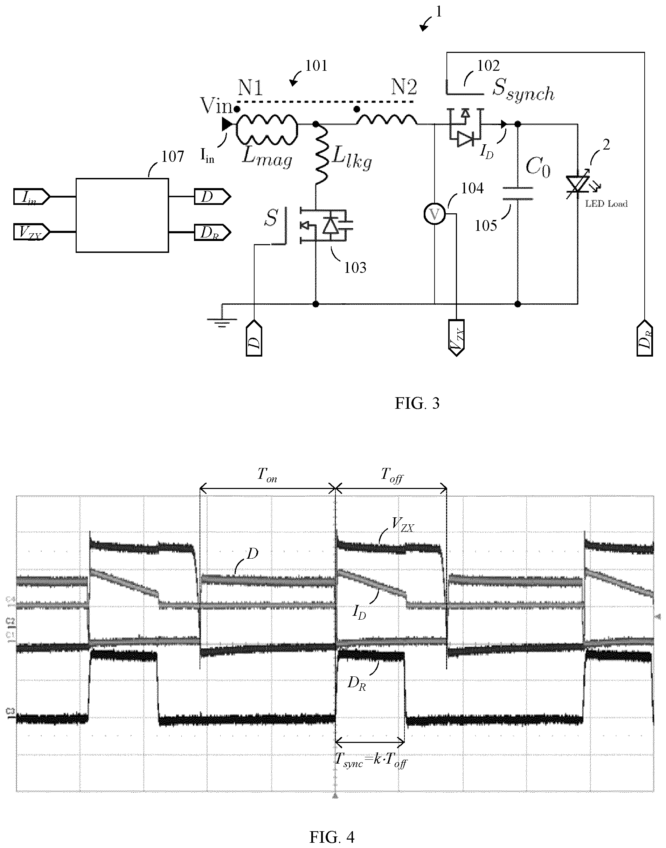

On the other hand, the tapped-inductor boost topology may experience high conduction losses due to the output diode $D_0$. The synchronous tapped-inductor boost topology (see FIG. 3) mitigates such conduction losses by rectifying the output using a rectifying switch $S_{synch}$ instead, improving efficiency. A drive signal for the rectifying switch $S_{synch}$ typically uses a complementary of a drive signal of the main/regulating switch S with some deadtime. However, this approach disrupts the above-mentioned BCM operation. The rectifying switch $S_{synch}$ removes the natural diode-based switching mechanism as the rectifying switch $S_{synch}$ will remain on, meaning the 'anode' potential will not fall to zero but rather remain at the voltage level approximately equal to the output voltage. Current will flow instead from load to source.

## Summary

It is an object to overcome the above-mentioned and other drawbacks.

The foregoing and other objects are achieved by the features of the independent claims. Further implementation forms are apparent from the dependent claims, the description and the figures.

According to a first aspect, a power converter is provided for at least one LED. The converter comprises a tapped inductance and a rectifying circuit, arranged in series between an input potential and an output potential of the converter. The rectifying circuit comprises a rectifying switch. The converter further comprises a regulating switch, arranged between a tap of the tapped inductance and a ground potential of the converter. The converter further comprises a first sensing circuit, configured to sense a voltage being indicative of a common potential of the tapped inductance and the rectifying circuit relative to the ground potential of the converter. The converter further comprises a second sensing circuit, configured to sense a voltage being indicative of a measurement value of an input current of the converter. The converter further comprises a control circuit, configured to regulate an input current of the converter in accordance with a regulating duty cycle signal for the regulating switch; generate the regulating duty cycle signal for the regulating switch in accordance with the common potential and the input current of the converter; and generate a rectifying duty cycle signal for the rectifying switch in accordance with and being non-complementary to the regulating duty cycle signal.

The rectifying circuit may further comprise a Schottky diode arranged in parallel with the rectifying switch.

For generating the regulating duty cycle signal for the regulating switch in accordance with the common potential and the output current of the converter, the control circuit may further be configured to operate the converter in a boundary conduction mode, BCM.

For generating the regulating duty cycle signal for the regulating switch in accordance with the common potential and the input current of the converter, the control circuit may further be configured to limit an on-period of the regulating duty cycle signal in dependence of a control error of the input current of the converter.

For generating the regulating duty cycle signal for the regulating switch in accordance with the common potential and the input current of the converter, the control circuit may further be configured to start the on-period of the regulating duty cycle signal in response to a falling edge of the common potential below a threshold.

For generating the regulating duty cycle signal for the regulating switch in accordance with the common potential and the input current of the converter, the control circuit may further be configured to start the on-period of the regulating duty cycle signal in response to a lapse of a predicted off-period of the regulating duty cycle signal.

For generating the rectifying duty cycle signal for the rectifying circuit in accordance with and being non-complementary to the regulating duty cycle signal, the control circuit may further be configured to limit an on-period of the rectifying duty cycle signal to a fraction of an off-period of the regulating duty cycle signal.

For generating the rectifying duty cycle signal for the rectifying circuit in accordance with and being non-complementary to the regulating duty cycle signal, the control circuit may further be configured to start the on-period of the rectifying duty cycle signal in response to a falling edge of the regulating duty cycle signal.

For generating the rectifying duty cycle signal for the rectifying circuit in accordance with and being non-complementary to the regulating duty cycle signal, the control circuit may further be configured to generate the rectifying duty cycle signal in accordance with an exclusive-or combination of the regulating duty cycle signal and a variant of the regulating duty cycle signal having its on-period extended by the fraction of the predicted off-period of the regulating duty cycle signal.

The fraction may comprise between 60% and 80%, preferably between 65% and 75%, and more preferably between 69% and 71% of the off-period of the regulating duty cycle signal.

The first sensing circuit may comprise an ohmic voltage divider arranged between the common potential and the ground potential of the converter.

The second sensing circuit may comprise an ohmic resistor arranged between the input potential and the ground potential of the converter.

The control circuit may comprise one of: a microcontroller, and an ASIC.

The converter may further comprise an output capacitance, arranged between the output potential and the ground potential of the converter.

According to a second aspect, a driver is provided for at least one LED. The driver comprises a power factor correction, PFC, converter and a tapped-inductance boost converter of the first aspect.

**Advantageous Effects**

According to the present disclosure, the simple and effective control approach (ZX signal based BCM control) of a non-synchronous topology may be preserved while gathering the reduced conduction loss at lower output voltages of a synchronous topology.

More specifically, the provided approach improves efficiency at the lower output voltages, and is particularly useful at higher output powers (2.5W, 3.5W) where the lowest efficiency across the full voltage range is observed at these lower voltages, and is a limiting factor. It could be crucial in achieving an overall efficiency which allows the reduction in cell count for a given operating condition (power and duration), implying cost savings. Alternatively an improved minimum efficiency could increase a rated output power, enabling a more power dense product.

**Brief Description of Drawings**

The above-described aspects and implementations will now be explained with reference to the accompanying drawings, in which the same or similar reference numerals designate the same or similar elements.

The drawings are to be regarded as being schematic representations, and elements illustrated in the drawings are not necessarily shown to scale. Rather, the various elements are represented such that their function and general purpose become apparent to those skilled in the art.

FIG. 1     illustrates a tapped-inductor boost topology in accordance with prior art;

FIG. 2     illustrates waveforms of an operation of the tapped-inductor boost topology of FIG. 1;

FIG. 3     illustrates a synchronous tapped-inductor boost topology 1 in accordance with the present disclosure;

FIG. 4     illustrates waveforms of an operation of the synchronous tapped-inductor boost topology 1 of FIG. 3;

FIG. 5     illustrates schematically duty cycle signal generation for a main/regulating switch 103, S of FIG. 1 in accordance with prior art;

FIGs. 6-8   illustrate schematically duty cycle signal generation for a main/regulating switch 103, S of FIG. 3 in accordance with the present disclosure;

FIG. 9     illustrates an exemplary implementation of the turn-on operation of FIG. 6 in accordance with the present disclosure;

FIG. 10    illustrates waveforms of the exemplary implementation of FIG. 9 in accordance with the present disclosure; and

FIG. 11    illustrates an efficiency improvement of the synchronous tapped-inductor boost topology 1 in accordance with the present disclosure.

**Detailed Descriptions of Drawings**

In the following description, reference is made to the accompanying drawings, which form part of the disclosure, and which show, by way of illustration, specific aspects of implementations of the present disclosure or specific aspects in which implementations of the present disclosure may be used. It is understood that implementations of the present disclosure may be used in other aspects and comprise structural or logical changes not depicted in the figures. The following detailed description, therefore, is not to be taken in a limiting sense, and the scope of the present disclosure is defined by the appended claims.

For instance, it is understood that a disclosure in connection with a described method may also hold true for a corresponding apparatus or system configured to perform the method and vice versa. For example, if one or a plurality of specific method steps are described, a corresponding device may include one or a plurality of units, e.g. functional units, to perform the described one or plurality of method steps (e.g. one unit performing the one or plurality of steps, or a plurality of units each performing one or more of the plurality of steps), even if such one or more units are not explicitly described or illustrated in the figures. On the other hand, for example, if a specific apparatus is described based on one or a plurality of units, e.g. functional units, a corresponding method may include one step to perform the functionality of the one or plurality of units (e.g. one step performing the functionality of the one or plurality of units, or a plurality of steps each performing the functionality of one or more of the plurality of units), even if such one or plurality of steps are not explicitly described or illustrated in the figures. Further, it is understood that the features of the various exemplary implementations and/or aspects described herein may be combined with each other, unless specifically noted otherwise.

FIG. 1 illustrates a tapped-inductor boost topology in accordance with prior art.

This converter topology comprises a tapped inductance 101, $L_{mag}$ and a rectifying circuit 102 arranged in series between an input potential $V_{in}$ and an output potential $V_{out}$ of the converter.

In accordance with passive rectification, the rectifying circuit 102 comprises a rectifying output diode 102, $D_0$.

The tapped inductance 101, $L_{mag}$ comprises magnetically coupled sections of $N_1$ and $N_2$ winding turns and an intervening tap (i.e., a common intermediate terminal).

The converter further comprises a main/regulating switch 103, S, arranged between the tap and a ground potential of the converter.

The converter may further comprise a first sensing circuit 104, configured to sense a voltage being indicative of a common potential $V_{zx}$ of the tapped inductance 101, $L_{mag}$ and the rectifying circuit 102 relative to the ground potential of the converter. This common potential $V_{zx}$ relative to the ground potential of the converter represents an anode voltage $V_{zx}$ of the rectifying output diode 102, $D_0$. For example, the first sensing circuit 104 may comprise an ohmic voltage divider $R_1$, $R_2$ (not shown) arranged between the common potential $V_{zx}$ and the ground potential of the converter.

The converter may further comprise an output capacitance 105, $C_0$, arranged between the output potential $V_{out}$ and the ground potential of the converter. A load comprising at least one LED 2 is connectable to the converter in the same way.

The converter may further comprise a second sensing circuit (not shown), configured to sense a voltage being indicative of a measurement value $I_{in,meas}$ of an input current $I_{in}$ of the converter. For example, the second sensing circuit may comprise an ohmic resistor $R_3$ (not shown) between the input potential and the ground potential of the converter.

The converter may further comprise a control circuit (not shown), such as a microcontroller or an ASIC. The control circuit is configured to regulate an input current of the converter in accordance with a regulating duty cycle signal D for the regulating switch 103, S, and to generate the regulating duty cycle signal D for the regulating switch 103, S in accordance with the common potential $V_{zx}$ and the input current $I_{in}$ of the converter.

As will be appreciated, the tapped-inductor boost topology may experience high conduction losses due to the output diode $D_0$.

FIG. 2 illustrates waveforms of an operation of the tapped-inductor boost topology of FIG. 1.

A turn-off of the rectifying output diode 102, $D_0$, as indicated by a zero crossing of its anode voltage $V_{zx}$, is a natural trigger of a turn-on of the main/regulating switch 103, S once the inductor current has reached zero.

As can be seen in FIG. 2, after the diode current $I_D$ decays to 0A, the falling anode voltage $V_{zx}$ causes a zero-current crossing signal ZX to fall, which then triggers the control circuit to turn on the main/regulating switch 103, S again. This also corresponds with a Valley Switching operation, in which the regulating switch $V_{DS}$ oscillates to 0V before turn on, allowing ZVS on turn on.

FIG. 3 illustrates a synchronous tapped-inductor boost topology 1 in accordance with the present disclosure.

The synchronous topology 1 is proposed to reduce the high conduction losses in the rectifying circuit 102 of the topology of FIG. 1, by using a rectifying switch 102, $S_{synch}$ (i.e., a MOSFET switch) to override the rectifying output diode 102, $D_0$ for lower conduction losses.

Structurally, the converter 1 thus corresponds to the topology of FIG. 1 with the exception of the rectifying circuit 102, which comprises the rectifying switch 102, $S_{synch}$ instead of the rectifying output diode 102, $D_0$ (note that the rectifying circuit 102 may nevertheless comprise a Schottky diode $D_0$ (not shown) arranged in parallel with the rectifying switch $S_R$). This requires a rectifying duty cycle signal $D_R$ for the rectifying switch 102, $S_{synch}$.

The additional leakage inductance $L_{lkg}$ shown in the synchronous topology 1 of FIG. 3 is also implied in the topology of FIG. 1.

The power converter 1 of FIG. 3 may form part of a driver (not shown) for the at least one LED 2, further comprising a power factor correction, PFC, converter 31.

The synchronous converter 1 comprises a control circuit 107, configured to perform regulation of the input current $I_{in}$ in accordance with a regulating duty cycle signal D for the regulating switch 103, S, and further configured to generate the regulating duty cycle signal D for the regulating switch 103, S in accordance with the common potential $V_{zx}$ and the input current $I_{in}$ of the

converter 1, as already mentioned in connection with the topology of FIG. 1.

For generating the regulating duty cycle signal D for the regulating switch 103, S in accordance with the common potential $V_{zx}$ and the input current $I_{in}$ of the converter, the control circuit 107 may further be configured to operate the converter 1 in a boundary conduction mode, BCM.

Additionally, the control circuit 107 is configured to generate a rectifying duty cycle signal $D_R$ for the rectifying switch 102, $S_{synch}$ in accordance with and being non-complementary to the regulating duty cycle signal D.

To enable synchronous operation while preserving the BCM operation based on the zero-crossing of the anode voltage $V_{zx}$, the rectifying switch 102, $S_{synch}$ is switched off before the diode current $I_D$ reaches zero by calculating an on-period $T_{synch}$ of the rectifying switch 102, $S_{synch}$ from the on-period $T_{on}$ of the regulating switch 103, S, the input voltage $V_{in}$ and the output voltage $V_{out}$ (measurable as known in the art) as follows:

$$ T_{synch} = k \, T_{off} $$

$$ T_{off} = \frac{T_{on}(N_2/N_1 + 1)}{\frac{V_{out}}{V_{in}} - 1} $$

The fraction k of the off-period $T_{off}$ of the regulating switch 103, S, does not need to be as close to 1 as possible, as an analysis of loss mitigation shows that a value of $k = 0{,}7$ (i.e., 70%) already mitigates close to 90% of the diode's conduction losses.

FIG. 4 illustrates waveforms of an operation of the synchronous tapped-inductor boost topology 1 of FIG. 3.

As can be seen, the regulating switch 103, S is driven by the regulating duty cycle signal D, and the rectifying switch 102, $S_{synch}$ is driven by the rectifying duty cycle signal $D_R$.

The rectifying switch 102, $S_{synch}$ conducts the discharging / diode current $I_D$ for $T_{synch} = k \, T_{off}$, i.e., for a majority of the off-period $T_{off}$ of the regulating switch 103, S, then switches off early to allow the body diode of the rectifying switch 102, $S_{synch}$ (or an additional Schottky diode) to take over.

Note that this approach preserves the anode voltage $V_{zx}$ used to turn on the main/regulating switch 103, S once the inductor current has reached zero.

It may further be observed that the anode voltage $V_{zx}$ rises slightly as the rectifying switch 102, $S_{synch}$ switches off, since its value is now equal to $V_{out} + V_{fwd}$ rather than $V_{out} + V_{DSon}$. The anode voltage $V_{zx}$ falls to zero as in the topology of FIG. 1, allowing the zero-crossing to truncate the PWM period $T = T_{on} + T_{off}$ of the regulating switch 103, S, and turn the same on again.

Note that the rectifying duty cycle signal $D_R$ of the rectifying switch 102, $S_{synch}$ is not the complementary of the regulating duty cycle signal D of the regulating switch 103, S as $D_R$ drops much earlier than D rises. There are several ways of generating the rectifying duty cycle signal $D_R$, as shown below.

FIG. 5 illustrates schematically duty cycle signal generation for a main/regulating switch 103, S of FIG. 1 in accordance with prior art, and FIGs. 6-8 illustrate schematically duty cycle signal generation for the main/regulating switch 103, S of FIG. 3 in accordance with the present disclosure.

Generation of the regulating duty cycle signal D

According to the approaches of FIGs. 5-8, the on-period $T_{on}$ of the regulating duty cycle signal D is limited by control/regulation. This is indicated by the feedback loop symbol present in said figures.

More specifically, for generating the regulating duty cycle signal D for the regulating switch 103, S in accordance with the common potential $V_{zx}$ and the input current $I_{in}$ of the converter 1, the control circuit 107 may further be configured to limit an on-period $T_{on}$ of the regulating duty cycle signal D in dependence of a control error $e = I_{in,ref} - I_{in,meas}$ of the input current $I_{in}$ of the converter 1.

According to the approaches of FIGs. 5-7, the off-period $T_{off}$ of the regulating duty cycle signal D is limited in accordance with the zero-crossing of the common potential ("anode voltage") $V_{zx}$ (or a zero-crossing signal ZX derived from the common potential).

That is to say, for generating the regulating duty cycle signal D for the regulating switch 103, S in accordance with the common potential $V_{zx}$ and the input current $I_{in}$ of the converter 1, the control circuit 107 may further be configured to start the on-period $T_{on}$ of the regulating duty cycle signal D in response to a falling edge of the common potential $V_{zx}$ below a threshold $V_{zx,ref}$.

By contrast, according to the approach of FIG. 8, the off-period $T_{off}$ of the regulating duty cycle signal D is limited by the lapse of a timer ("Fully Predictive Off Time").

In other words, for generating the regulating duty cycle signal D for the regulating switch 103, S in accordance with the common potential $V_{zx}$ and the input current $I_{in}$ of the converter 1, the control circuit 107 may further be configured to start the on-period $T_{on}$ of the regulating duty cycle signal D in response to a lapse of a predicted off-period $T_{off}$ of the regulating duty cycle signal D.

Generation of the rectifying duty cycle signal $\underline{D_R}$

According to the approaches of FIGs. 6-8, the on-period $T_{sync}$ of the rectifying duty cycle signal $D_R$ is limited by the lapse of a timer.

In more detail, for generating the rectifying duty cycle signal $D_R$ for the rectifying circuit 102 in accordance with and being non-complementary to the regulating duty cycle signal D, the control circuit 107 may further be configured to limit the on-period $T_{sync}$ of the rectifying duty cycle signal $D_R$ to a fraction $k$ of an off-period $T_{off}$ of the regulating duty cycle signal D.

In particular, the fraction $k$ may comprise between 60% and 80%, preferably between 65% and 75%, and more preferably between 69% and 71% of the off-period $T_{off}$ of the regulating duty cycle signal D.

As previously mentioned, a value of $k = 0,7$ (i.e., 70%) already mitigates close to 90% of the diode's conduction losses.

According to the approaches of FIGs. 6-8, the on-period $T_{sync}$ of the rectifying duty cycle signal $D_R$ is synchronized with the off-period $T_{off}$ of the regulating duty cycle signal D.

Thus, for generating the rectifying duty cycle signal $D_R$ for the rectifying circuit 102 in accordance with and being non-complementary to the regulating duty cycle signal D, the control circuit 107 may further be configured to start the on-period $T_{sync}$ of the rectifying duty cycle signal $D_R$ in response to a falling edge of the regulating duty cycle signal D, and optionally after a given deadtime (i.e., a controller implemented fixed time delay).

According to the approach of FIG. 6, the generation of the rectifying duty cycle signal $D_R$ may involve an exclusive-or operation.

More specifically, for generating the rectifying duty cycle signal $D_R$ for the rectifying circuit 102 in accordance with and being non-complementary to the regulating duty cycle signal D, the control circuit 107 may further be configured to generate the rectifying duty cycle signal $D_R = D \oplus D'$ in accordance with an exclusive-or combination of the regulating duty cycle signal D and a variant D' of the regulating duty cycle signal D having its on-period extended by the fraction $kT_{off}$ of the predicted off-period $T_{off}$ of the regulating duty cycle signal D.

According to the approaches of FIGs. 7-8, the generation of the rectifying duty cycle signal $D_R$ may involve a timer operation.

As mentioned previously, the on-period $T_{sync}$ of the rectifying duty cycle signal $D_R$ may start in response to a falling edge of the regulating duty cycle signal D (i.e., upon a lapse of a timer limiting the on-period $T_{on}$ of the regulating duty cycle signal D) and optionally after a given deadtime, and the on-period $T_{sync}$ of the rectifying duty cycle signal $D_R$ may be limited to a fraction $kT_{off}$ of an off-period $T_{off}$ of the regulating duty cycle signal D (i.e., by a lapse of a timer limiting the on-period $T_{sync}$ of the rectifying duty cycle signal $D_R$ to said fraction $kT_{off}$). This approach produces the same result as the approach of FIG. 6.

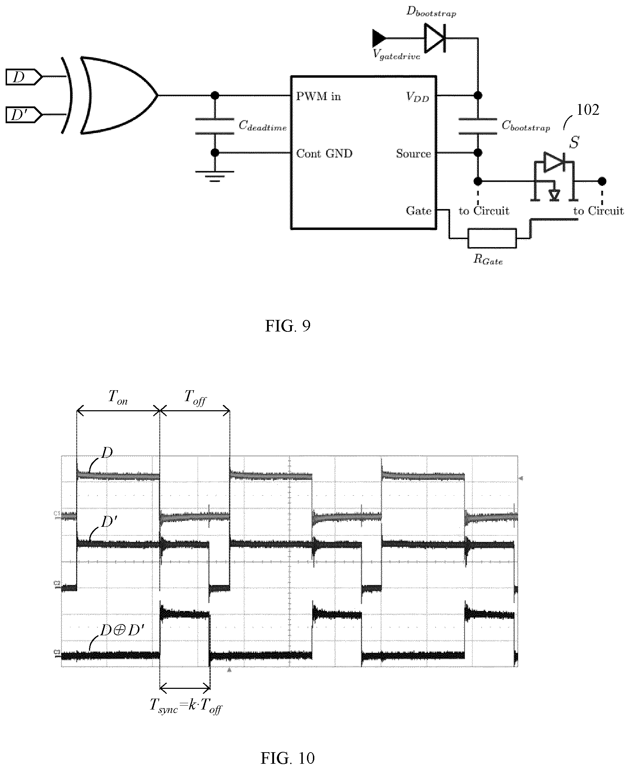

FIG. 9 illustrates an exemplary implementation of the turn-on operation of FIG. 6 in accordance with the present disclosure.

In addition to the regulating duty cycle signal D whose off-period $T_{off}$ is truncated by the zero (current) crossing signal of the anode, a variant D' of the regulating duty cycle signal D is provided, having its on-period extended by the fraction $kT_{off}$ of the predicted off-period $T_{off}$ of the regulating duty cycle signal D. Both of these PWM / duty cycle signals are sent into an XOR gate, which generates the rectifying duty cycle signal $D_R$.

FIG. 10 illustrates waveforms of the exemplary implementation of FIG. 9 in accordance with the present disclosure.

Returning to FIG. 9, a discrete capacitance $C_{deadtime}$ may be added to the output of the XOR gate to delay the rise and fall times. This has minimum impact on switching loss as the rectifying switch 102, $S_{synch}$ is turned on and off while its body diode is conducting. However, this may prevent shoot-through current from both switches 102, 103 being on at the same time when the regulating switch 103, S turns off and the rectifying switch 102, $S_{synch}$ turns on.

An exemplary bootstrap gate driver for the rectifying switch 102, $S_{synch}$ is also shown.

With regards to the method in FIGs 7 and 8, some deadtime may be implemented by the controller after turn off of the regulating switch 103, S and before turn on of the rectifying switch 102, $S_{synch}$ in order to prevent shoot-through current from both switches 102, 103 being on at the same time when the regulating switch 103, S turns off and the rectifying switch 102, $S_{synch}$ turns on.

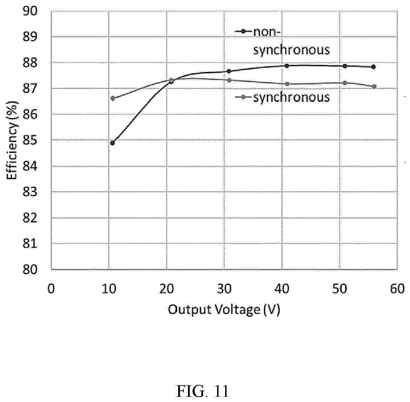

FIG. 11 illustrates an efficiency improvement of the synchronous tapped-inductor boost topology 1 in accordance with the present disclosure.

The efficiency improvement relates to a 3.5W converter. Approximately 1.5% efficiency improvement is achieved especially for low output voltages, thereby flattening the overall efficiency curve.

The present disclosure has been described in conjunction with various implementations as examples. However, other variations can be understood and effected by those persons skilled in the art and practicing the claimed matter, from the studies of the drawings, this disclosure and the independent claims. In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation. A computer program may be stored/distributed on a suitable medium, such as an optical storage medium or a solid-state medium supplied together with or as part of other hardware, but may also be distributed in other forms, such as via the Internet or other wired or wireless telecommunication systems.

**Claims**

1. A power converter (1) for at least one LED (2), comprising

    a tapped inductance (101, $L_{mag}$, $N_1$, $N_2$) and a rectifying circuit (102), arranged in series between an input potential ($V_{in}$) and an output potential ($V_{out}$) of the converter (1), the rectifying circuit (102) comprising a rectifying switch ($S_{synch}$);
    a regulating switch (103, S), arranged between a tap of the tapped inductance (101, $L_{mag}$, $N_1$, $N_2$) and a ground potential of the converter (1);
    a first sensing circuit (104), configured to sense a voltage being indicative of a common potential ($V_{zx}$) of the tapped inductance (101, $L_{mag}$, $N_1$, $N_2$) and the rectifying circuit (102) relative to the ground potential of the converter (1);
    a second sensing circuit, configured to sense a voltage being indicative of a measurement value ($I_{in,meas}$) of an input current ($I_{in}$) of the converter (1); and
    a control circuit (107), configured to

        - regulate an input current of the converter (1) in accordance with a regulating duty cycle signal (D) for the regulating switch (103, S);
        - generate the regulating duty cycle signal (D) for the regulating switch (103, S) in accordance with the common potential ($V_{zx}$) and the input current ($I_{in}$) of the converter (1); and
        - generate a rectifying duty cycle signal ($D_R$) for the rectifying switch ($S_R$) in accordance with and being non-complementary to the regulating duty cycle signal (D).

2. The converter (1) of claim 1, the rectifying circuit (102) further comprising a Schottky diode ($D_0$) arranged in parallel with the rectifying switch ($S_R$).

3. The converter (1) of any one of the preceding claims, for generating the regulating duty cycle signal (D) for the regulating switch (103, S) in accordance with the common potential ($V_{zx}$) and the input current ($I_{in}$) of the converter (1), the control circuit (107) is further configured to

        - operate the converter (1) in a boundary conduction mode, BCM.

4. The converter (1) of any one of the preceding claims, for generating the regulating duty cycle signal (D) for the regulating switch (103, S) in accordance with the common potential ($V_{zx}$) and the input current ($I_{in}$) of the converter (1), the control circuit (107) is further configured to

        - limit an on-period ($T_{on}$) of the regulating duty cycle signal (D) in dependence of a control error ($e = I_{in,ref} - I_{in,meas}$) of the input current ($I_{in}$) of the converter (1).

5. The converter (1) of claim 4, for generating the regulating duty cycle signal (D) for the regulating switch (103, S) in accordance with the common potential ($V_{zx}$) and the input current ($I_{in}$) of the converter (1), the control circuit (107) is further configured to

        - start the on-period ($T_{on}$) of the regulating duty cycle signal (D) in response to a falling edge of the common potential ($V_{zx}$) below a threshold ($V_{a,ref}$).

6. The converter (1) of claim 4, for generating the regulating duty cycle signal (D) for the regulating switch (103, S) in accordance with the common potential ($V_{zx}$) and the input current ($I_{in}$) of the converter (1), the control circuit (107) is further configured to

        - start the on-period ($T_{on}$) of the regulating duty cycle signal (D) in response to a lapse of a predicted off-period ($T_{off}$) of the regulating duty cycle signal (D).

7. The converter (1) of any one of the claims any one of the preceding claims, for generating the rectifying duty cycle signal ($D_R$) for the rectifying circuit (102) in accordance with and being non-complementary to the regulating duty cycle signal (D), the control circuit (107) is further configured to

        - limit an on-period ($T_{sync}$) of the rectifying duty cycle signal ($D_R$) to a fraction (k) of an off-period ($T_{off}$) of the regulating duty cycle signal (D).

8. The converter (1) of claim 7, for generating the rectifying duty cycle signal ($D_R$) for the rectifying circuit (102) in accordance with and being non-complementary to the regulating duty cycle signal (D), the control circuit (107) is further configured to

        - start the on-period ($T_{sync}$) of the rectifying duty cycle signal ($D_R$) in response to a falling edge of the regulating duty cycle signal (D).

9. The converter (1) of claim 8, for generating the rectifying duty cycle signal ($D_R$) for the rectifying circuit (102) in accordance with and being non-complementary to the regulating duty cycle signal (D), the control circuit (107) is further configured to

- generate the rectifying duty cycle signal ($D_R = D \oplus D'$) in accordance with an exclusive-or combination of the regulating duty cycle signal (D) and a variant (D') of the regulating duty cycle signal (D) having its on-period extended by the fraction ($kT_{off}$) of the predicted off-period ($T_{off}$) of the regulating duty cycle signal (D).

10. The converter (1) of any one of the claims 7 to 9, the fraction (k) comprising between 60% and 80%, preferably between 65% and 75%, and more preferably between 69% and 71% of the off-period ($T_{off}$) of the regulating duty cycle signal (D).

11. The converter (1) of any one of the preceding claims, the first sensing circuit (104) comprising an ohmic voltage divider ($R_1$, $R_2$) arranged between the common potential ($V_{zx}$) and the ground potential of the converter (1).

12. The converter (1) of any one of the preceding claims, the second sensing circuit (106) comprising an ohmic resistor ($R_3$) between the input potential ($V_{in}$) and the ground potential of the converter (1).

13. The converter (1) of any one of the preceding claims, the control circuit (107) comprising one of: a microcontroller, and an ASIC.

14. The converter (1) of any one of the preceding claims, further comprising
an output capacitance (105, $C_0$), arranged between the output potential ($V_{out}$) and the ground potential of the converter (1).

15. A driver (3) for at least one LED (2), comprising

a power factor correction, PFC, converter (31); and
a tapped-inductance boost converter (1) of any one of the preceding claims.

101

N1          N2          $D_0$   $I_D$

Vin ▶ —[ $L_m$ ]— •—[ ]— ▷|— ▶ — Vout

102

104        105        2

$C_0$                LED Load

S

103        106

$I_S$

$\boxed{D}$        $\boxed{V_{ZX}}$        $\boxed{I_{out}}$

FIG. 1 (Prior art)

FIG. 2 (Prior art)

FIG. 3

FIG. 4

FIG. 5 (Prior art)

FIG. 7

FIG. 6

FIG. 8

FIG. 9

FIG. 10

FIG. 11

Europäisches
Patentamt

European
Patent Office

Office européen
des brevets

# EUROPEAN SEARCH REPORT

**Application Number**

EP 24 16 4343

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 112 134 443 B (UNIV XI AN JIAOTONG; LONTEN SEMICONDUCTOR CO LTD) 7 September 2021 (2021-09-07) * * | 1-9, 11-15 | INV. H02M3/158 H02M1/00 H05B45/38 |
| A | KANG JEONG-IL ET AL: "High-efficiency boundary conduction mode tapped-inductor boost LED driver", 2014 IEEE INTERNATIONAL CONFERENCE ON INDUSTRIAL TECHNOLOGY (ICIT), IEEE, 26 February 2014 (2014-02-26), pages 261-266, XP032639970, DOI: 10.1109/ICIT.2014.6894877 [retrieved on 2014-09-09] * pages 1-3 * | 1-15 | |
| A | MUSUMECI SALVATORE ET AL: "Very Low Input Voltage Synchronous Coupled Inductor Boost Converter with High Performance Power MOSFETs", 2018 IEEE INTERNATIONAL TELECOMMUNICATIONS ENERGY CONFERENCE (INTELEC), IEEE, 7 October 2018 (2018-10-07), pages 1-6, XP033501352, DOI: 10.1109/INTLEC.2018.8612365 [retrieved on 2019-01-14] * abstract * * * figure 5 * * first two paragraphs of page 4 * | 2 | **TECHNICAL FIELDS SEARCHED (IPC)** H02M H05B |

-/--

The present search report has been drawn up for all claims

| Place of search | Date of completion of the search | Examiner |
|---|---|---|
| The Hague | 22 August 2024 | Standaert, Frans |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | NGUYEN VAN-QUYET ET AL: "A Loop Control Design to Achieve Boundary Conduction Mode in DC-DC Power Converter for Maximizing Efficiency", 2019 13TH INTERNATIONAL CONFERENCE ON SENSING TECHNOLOGY (ICST), IEEE, 2 December 2019 (2019-12-02), pages 1-6, XP033746701, DOI: 10.1109/ICST46873.2019.9047693 [retrieved on 2020-03-25] * pages 1-3 * ----- | 1-15 | |
| | | | **TECHNICAL FIELDS SEARCHED (IPC)** |

The present search report has been drawn up for all claims

| Place of search | Date of completion of the search | Examiner |
|---|---|---|
| The Hague | 22 August 2024 | Standaert, Frans |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 16 4343

This annex lists the patent family members relating to the patent documents cited in the above-mentioned European search report.
The members are as contained in the European Patent Office EDP file on
The European Patent Office is in no way liable for these particulars which are merely given for the purpose of information.

22-08-2024

| Patent document cited in search report | Publication date | Patent family member(s) | Publication date |
|---|---|---|---|
| CN 112134443 B | 07-09-2021 | NONE | |

For more details about this annex : see Official Journal of the European Patent Office, No. 12/82